# EUROPEAN PATENT APPLICATION

(11) **EP 2 043 368 A2**
(43) Date of publication of application: **01.04.2009**
(21) Application number: 08252502.3
(22) Date of filing: 23.07.2008
(51) Int. Cl.: H04N 5/76

(54) **A recording method and a recording apparatus for internal information of image equipment**

(30) Priority: 26.09.2007 JP 2007248354
(71) Applicant: Hitachi Ltd., Chiyoda-ku Tokyo 100-8280 (JP)
(72) Inventor: Nagano, Takehiko c/o Hitachi, Ltd. Intellectual Property Group, Chiyoda-ku, Tokyo 100-8220 (JP); Shigeoka, Tomohiko c/o Hitachi, Ltd. Intellectual Property Group, Chyyoda-ku, Tokyo 100-8220 (JP)
(74) Representative: Calderbank, Thomas Roger

(57) **Abstract**

A method for recording internal information of video equipment, for digital video information of the video equipment, comprises the following steps of: a step for obtaining internal information of the equipment; a step for analyzing a stream of the digital video information to be recorded, and for detecting a packet identifier not used for a packet, recording the internal information therein; a step for processing the internal information of the equipment into packet information; and a step for changing the stream of the video information, so as to include the packet information of the internal information of the equipment therein, wherein the internal information is included in a part of the stream of the digital video information, whereby to record the digital video information, whereby providing a recording method and a recording apparatus for recording the internal information of the apparatus necessary for trouble analyzing, without adding an apparatus, newly, and lowering an operability for a user.

## Description

The present invention relates to an image information apparatus, such as, a digital television, etc., and it relates, in particular, to a recording method and a recording apparatus suitable for recording/collecting internal information of image information apparatuses.

In recent years, an information household equipment, including, such as, a digital television and/or a car navigation system, for example, becomes complicated in the system thereof, and therefore it takes a long time for work of analyzing when troubles or abnormalities occurs in the equipment, i.e., it is difficult job. For that reason, it is expected to obtain the information when the trouble occurs, so as to put into a practical use for the trouble analysis.

In particular, the information household equipment, such as, the digital television apparatus, representatively, for example, there is no case where hardware resource is added for recording the internal information within the equipment. For that reason, upon generation of the trouble or abnormal operation, in particular, when trying to analyze it by obtaining the internal information remained within the equipment after the trouble occurs, however cases are only, such as, the remaining information is less, or the remaining information is that obtained just near to, and in many cases, there is not recorded the information necessary for it, and therefore, it is difficult to analyze the troubles.

In case where the information household equipment generating the trouble or the abnormal operation therein is connected on a network, there is a method of transmitting the trouble to other equipments on that network. Such the technology is disclosed in the following Patent Document 1, for example.

Also, there is proposed a method for recoding the internal information remained inside the equipment into a storage device of its own, or recoding it into a file on the network.

[Patent Document 1] Japanese Patent Laying-Open No. 2004-187196 (2004).

With the technology described in the Patent Document 1 mentioned above, it is possible to record the internal information of the apparatus; however, a connecting function with the network and a network recording apparatus are necessary, and therefore there is a problem that it takes costs, relatively.

Also, it is necessary for a user to memorize the functions, such as, for setting up of connection with the network and a method for transmitting the internal information, for recording the internal information, etc., for example, other than the basic function of the information household equipment, and this brings about a problem of lowering the operability of that information household equipment.

An object, according to the present invention, is to provide a recording method and a recoding apparatus for enabling to record the internal information of the apparatus, which is necessary for the trouble analysis, without adding an apparatus, newly, and also without lowering the user operability thereof.

For accomplishing the object mentioned above, according to the present invention, within a recording apparatus for digital video information, in particular, in the built-in equipment thereof, having a digital broadcast receiving/recording function, such as, the digital television apparatus or the HDD recorder apparatus, checking is made on a stream used when recording the digital broadcast therein, and if there is a vacant stream, trouble information is recorded in that stream; thereby enabling to record the trouble information therein in spite of using condition of the recording function thereof.

In more details, according to the present invention, there is provided a method for recording internal information of video equipment, for digital video information of the video equipment, comprising the following steps of: a step for obtaining internal information of the equipment; a step for analyzing a stream of the digital video information to be recorded, and for detecting a packet identifier not used for a packet, recording said internal information therein; a step for processing the internal information of said equipment into packet information; and a step for changing the stream of said video information, so as to include the packet information of the internal information of said equipment therein, wherein the internal information is included in a part of the stream of the digital video information, whereby to record the digital video information.

According to the present invention, since the internal information of the equipment, necessary for analyzing the troubles, can be recorded, easily, without lowering an operability for a user, therefore it is easy to analyze the troubles.

Those and other objects, features and advantages of the present invention will become more readily apparent from the following detailed description when taken in conjunction with the accompanying drawings wherein:
Fig. 1 is system view for showing entire structures of a recording apparatus, according to an embodiment of the present invention;
Fig. 2 is a view for showing an example of the details of an internal information recording unit, within a HDD recorder apparatus according to the present invention;
Fig. 3 is a view for showing an example of a header portion of a transport packet, which is used in digital broadcasting;
Fig. 4 is a flowchart for showing steps of outputting the internal information, within the embodiment of the present invention;
Fig. 5 is a flowchart for showing steps of determining PID, within the embodiment of the present invention; and
Fig. 6 is a flowchart for showing steps of recording the internal information, within the embodiment of the present invention.

Hereinafter, embodiments according to the present invention will be fully explained by referring to the attached drawings.

Hereinafter, explanation will be made on a system for outputting the internal information of a digital television apparatus, intermittently, to externally connected equipment (e.g., a HDD recorder) , during operation of the digital television apparatus, wherein upon receipt of the information outputted, the externally connected equipment (e.g., the HDD recorder) records the internal information of the television apparatus as broadcast program information.

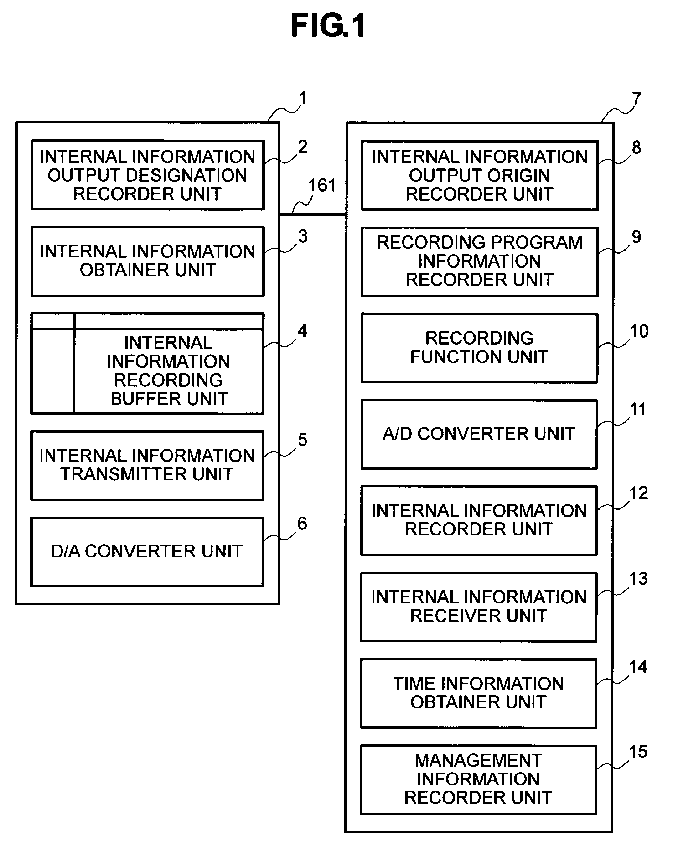

Fig. 1 is system view for showing entire structures of a recording apparatus, according to an embodiment of the present invention. The system according to the present embodiment, as is shown in Fig. 1, comprises a digital television apparatus 1 as an original for outputting the internal information, a HDD recorder 7 for obtaining the internal information outputted from the digital television apparatus 1, so as to record it as a broadcast program, and a cable 161 for connecting the digital television apparatus 1 and the HDD recorder 7, so as to enable transmission of data thereon.

The digital television apparatus 1 has, other than the functions that are equipped with a normal television apparatus, an internal information output designation recorder portion or unit 2 for registering an output designation of the internal information and an interface to be used for output, an internal information obtainer portion or unit 3 for obtaining the internal information, and an internal information recording buffer portion or unit 4 for recoding the internal information obtained, temporarily therein.

The digital television apparatus 1 further has an internal information transmitter portion or unit 5, for transmitting the internal information, which is recorded in the internal information recording buffer unit 4, to the HDD recorder 7, with applying protocol that is registered in the internal information output designation recorder unit 2, and a wiring 16 for connecting between the HDD recorder and the digital television apparatus 1. In case where the wiring 16 can transmit only analog data, there is provided a D/A converter 6 for converting the data to be transmitted from digital data into analog data.

Next, explanation will be made on the structures of the HDD recorder 7. The HDD recorder 7 comprises a recording program information recorder portion or unit 9 for recording therein programmed recording information of the HDD recorder 7, so as to achieve a function as a normal recorder, a recording function portion or unit 10 for recording the program on the air, and a time information obtainer portion or unit 14 for obtaining time information when the system operates.

Further, the HDD recorder 7 has an internal information recorder portion or unit 12 for recording the internal information transmitted from the digital television apparatus 1 as the broadcast program. This internal information recorder unit 12 may record the internal information merging into the program information, by adding it into a vacant or empty stream of the broadcast program of the digital broadcast, on which recording is conducted. In this instance, a PID value of TS packet to be recorded or temporary management information may be recorded into a management information recorder portion or unit 15.

Connection between the HDD recorder 7 and the digital television apparatus 1 is conducted within an internal information receiver portion or unit 13, and it is controlled in accordance with the information of an internal information output origin recorder portion or unit 8 for registering therein a name or title of an internal information outputting apparatus and an interface to be used in the outputting thereof. For example, in accordance with the protocol registered in the internal information output origin recorder unit 8, the internal information of the digital television apparatus 1 is communicated from the internal information transmitter unit within the digital television apparatus 1 to the internal information receiver unit of the digital television apparatus 1.

In case where the cable 161 connecting between the HDD recorder and the digital television can transmit only analog data, the data transmitted is converted into digital data within an A/D converter portion or unit 11. The cable 161 may be a video signal cable, for example.

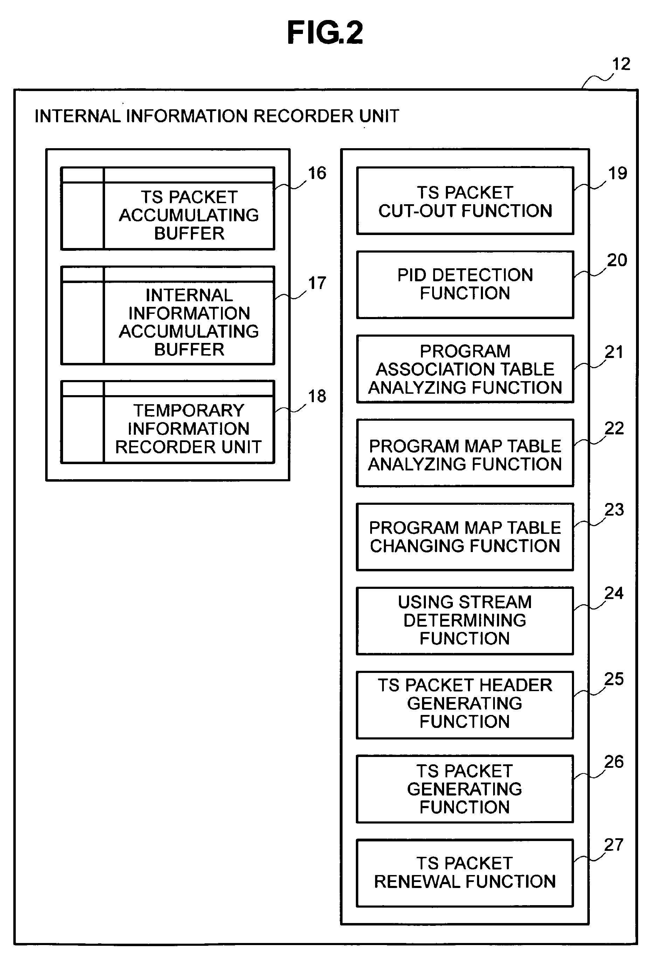

Fig. 2 is a view for explaining about the details of the internal information recorder unit 12. The internal information recorder unit 12 comprises a TS packet accumulating buffer 16 for accumulating TS packet before recording when a user is also conducting recording of the HDD recorder, temporally, when recording the internal information of the television apparatus, an internal information accumulation buffer 17 for accumulating the internal information before converting it into the TS packet, a temporary information recording portion or unit 18, as a temporary recording region or area, in which the functions of the internal information recording unit can be used widely, a TS packet cut-out function portion or unit 19 for cutting out a packet one by one from a head of the packets, a PID detecting function portion or unit 20 for obtaining PID (e.g., a stream ID) of the TS packet, a program association table analyzing function portion or unit 21 for detecting the PID of a program map table, managing the PID (e.g., the stream ID) of the ST packet, which is used by the recording program on which the user makes recording, a program map table analyzing function portion or unit 22 for detecting the PID of the stream is not used from the program map table, a using stream determining function portion or unit 24 for determining the stream ID to be used when newly adding or post-scripting the internal information of the television apparatus, a program map table changing function portion or unit 23 for influencing the PID information, which is determined to be used with the using stream determining function unit 24, on the program map table, a TS packet header generating function portion or unit 25 for producing a header for the TS packet, into which the internal information should be recorded, upon basis of the stream ID which is determined to be used by the using stream determining function, a TS packet generating function portion or unit 26 for making up the TS packet by combining the internal information and the TS packet, and a TS packet renewal function portion or unit 27 for delivering the TS packet generated within the internal information recording unit to the recording function unit 10.

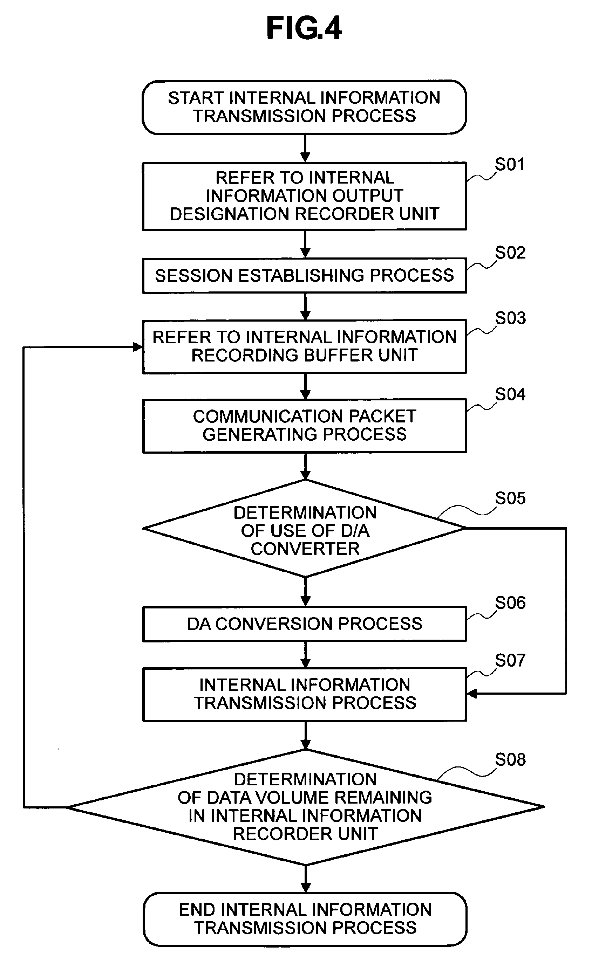

Next, explanation will be made on the flow of steps, in case when the digital television apparatus 1 transmits the internal information to the HDD recorder connected therewith, by referring to Fig. 1 mentioned above as well as the flowchart shown in Fig. 4. First of all, in a step S01, reference is made onto an output destination of the internal information registered in the internal information output designation recorder unit 2 and a mode or system of the cable to be used in the transmission. Next, in a step S02, the internal information transmitter unit 3 establishes a section between the internal information recorder unit 13 of the HDD recorder, i.e., a connecting designation.

Next, in a step S03 is obtained data having fixed length from the internal information recording buffer unit 4. Next, in a step S04, the internal information transmitter unit produces a packet fitting to the protocols to be used in the transmission, from the fixed length data obtained in the step S03. Next, in a step S05, upon basis of the information, which is referred in the step S01, it is determined on whether the cable is an analog cable or not, connecting between the digital television apparatus and the HDD recorder, and if it is the analog cable, then a process is executed for use of D/A conversion. If the D/A conversion is necessary, the process advances into a step S06, thereby executing the D/A conversion.

Next, if determining that the D/A conversion is not necessary in the step S05, then the process advances to a step S07, wherein the internal information transmitter unit 5 transmits the packet, which is produced in the step S04, to the internal information receiver unit 14 of the HDD recorder 7. Next, in a step S06, an amount or volume is calculated of the internal information remaining in the buffer. Next, if the volume is zero of the internal information in a step S08, then the process is completed. If not zero (0), then the process turns back to the step S03.

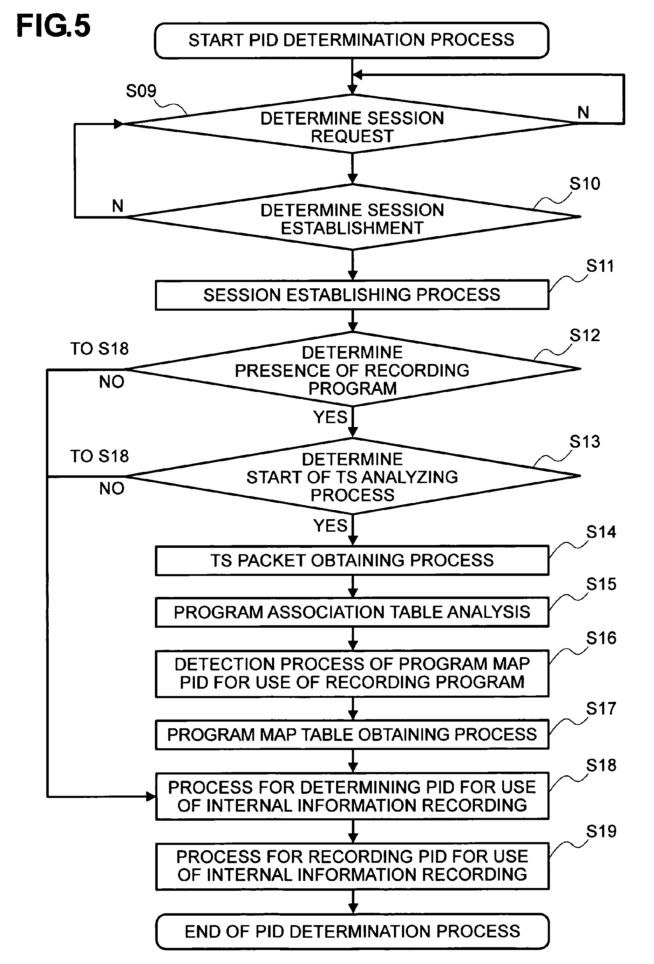

Next, explanation will be made in details thereof, about the steps of a process, for the HDD recorder 7 to determine the PID (i.e., the stream ID), necessary for recording the digital television internal information as the program of the digital broadcasting, in particular, when the internal information of the digital television apparatus from the internal information transmitter unit of the digital television apparatus 1 connected therewith, by referring to Figs. 1, 2 and 3, and also the flowchart shown in Fig. 5.

Firstly, in a step S09 shown in Fig. 5, the internal information receiver unit determines on whether there is a request for requiring a session establishment or not, from the internal information transmitter unit within the digital television apparatus 1. In case when there is the request for requiring a session establishment, the process advances into a step S10.

In the step S10 is made determination on whether it is the request for requiring a session establishment or not, coming from the equipments registered in the internal information output origin recorder unit 8 as the output origins. In case when determining that the origin of the request is the equipment registered, then the process advances into a session S11, while not so, then the process turns back to the session S08.

In the session S11, the internal information receiver unit 13 establishes a session between the internal information transmitter unit 5 of the digital television apparatus.

Next, in a step S12, by referring to the information of the recording program information recorder unit 9, it is checked on whether reservation is made or not for recording a broadcast program within a certain time-period from now. Since this time-period depends on implementation of a program, then it is determined depending upon the equipment. In case where there is the reservation of recording, then the process advances into a step S13, while in case where there is no reservation of recording, the process advances into a step S18.

In the step S13, the present time is obtained from the management information recorder unit 14, so as to be compared with the information of the recording program information unit 9, and as a result in case where it is within "n" seconds until beginning of the recording, the process advances into a step S14, but in case of not so, then it advances into the step S18. However, since this "n" seconds also depends on the implementation of the program, then it may take any extent of time-period.

In the step S14, with using the TS packet cut-out function unit 19, the TS packet for one (1) packet is taken out from the image or video information of recording target, which is recorded in the TS packet accumulation buffer 16. Then, the TS packet is recorded in the temporary information recording unit 18, temporally, and the process advances into a step S15.

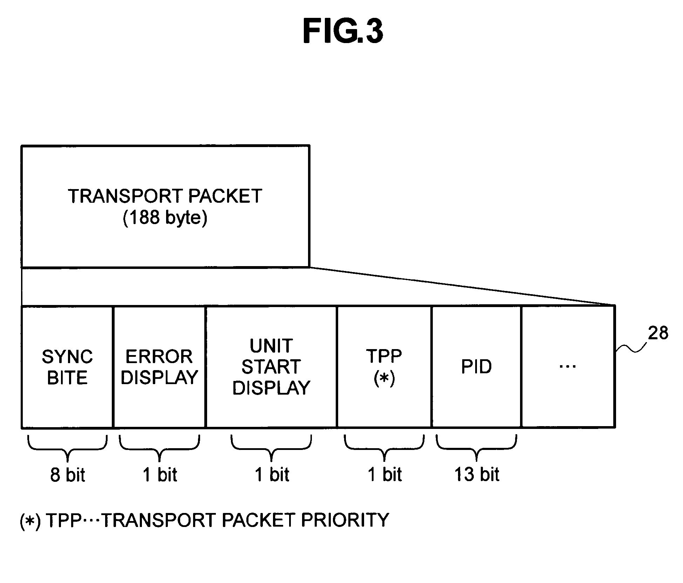

In the step S15, the program association table analyzing function unit 21 executes analysis of the program association table. Herein, Fig. 3 shows a part of the transport packet, which is applied in the digital broadcasting. In a transport packet are entered contents of the digital broadcasting for plural numbers of channels, however in the program association table (PAT) are recorded PIDs of special transport packets, each describing the stream structure or configuration for each channel (i.e., program map table PMT), for plural numbers of channels.

In the step S15, with using a fact that the program association table uses "PID=0x0000" therein, the PID detecting function unit 20 of the internal information recorder unit 12 takes out 13 bits, starting from 12^{th} bit from a head of the TS packet, which is recorded in the temporary information recording unit 18. And, determination is made on whether the value thereof is "PID=0x0000" or not, and in case where it is "PID=0x0000", the process advances into a step S16.

In the step S16, detection is made on a PID value of the program map table (PMT), describing the stream configuration of the target to be recorded in such a manner, which will be mentioned in the following, and the process advances into a step S17. Thus, the program association table analyzing function unit 21 searches for a service ID of a program number (i.e., a broadcast program discrimination or identification number), which is recorded in the recording program information unit 9, by referring to a payload of the TS packet, i.e., meaning to be the program association table (PAT) that is recorded in the TS packet accumulation buffer 16. Then, corresponding to the service ID found out, there is obtained the PID value of the program map table, describing the stream configuration of the target to be recorded, and it is recorded into the management information recorder unit 15.

In the step S17, the program map table analyzing function unit 22 extracts the program map table among the ST packets, with using the PID value of that program map table, which is recorded in the management information recorder unit 15, and then the process advances into the step S18.

In the step S18, the using stream determining function unit 24 analyzes the stream configuration of program of the recording target, which is recorded within the program map table extracted. In more details, a stream is determined to be used for recording the internal information therein, within a number of pieces of the streams, which is determined in accordance with a regulation applied in the digital broadcasting, as well as, the PID value of the stream to be used, to renew the management information recorder unit 15, and the process advances into a step S19.

In the step S19, the using stream determining function unit 24 records a stream PID to be added into the recording program information recorder unit 9, and during the broadcasting of the program to be recorded, it records an identifier indicating that the internal information of the digital television apparatus is recorded, and then the process is ended. As was mentioned above, the digital television internal information is recorded, in the form of the PID, which is necessary for recording as a digital broadcasting program (i.e., stream ID).

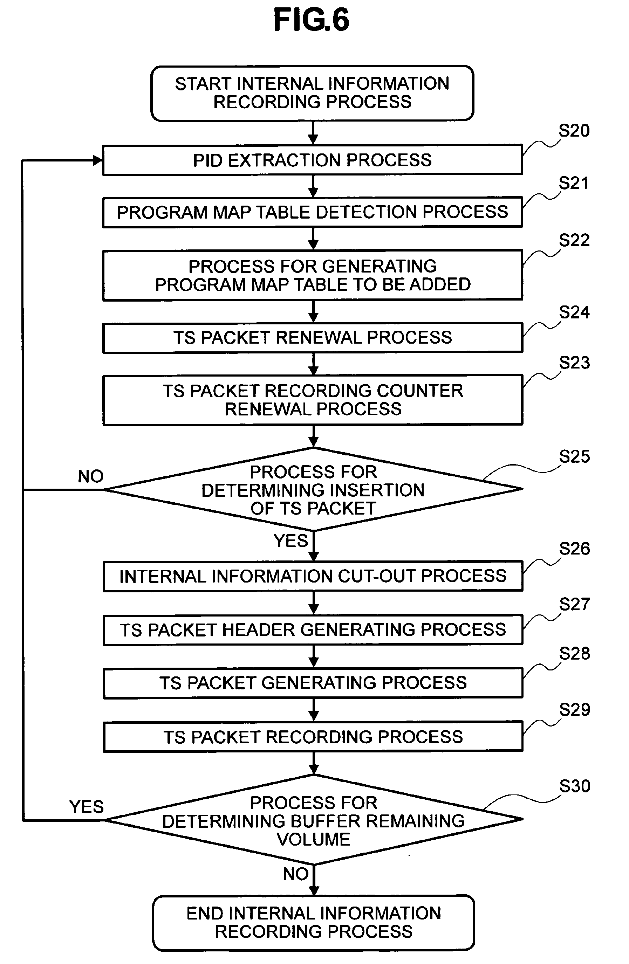

Next, explanation will be made on the processing, for the HDD recorder apparatus 7, to record the digital television internal information therein, actually, as a program of digital program, in particular, when the digital television internal information is transmitted from the internal information transmitter unit of the digital television apparatus 1, which is connected thereto, by referring to Figs. 1 and 2 mentioned above, and also the flowchart shown in Fig. 6.

In a step S20, the PID detecting function unit 20 extracts the PID of the TS packet, which is accumulated within the TS packet accumulating buffer 16, and then the process advances into a step S21. In the step S21, the program map table analyzing function unit 22 compares between the PID value of the program map table (PMT) , which is recorded within the management information recorder portion or unit 15, and the PID value, which is extracted in the previous step. In case where it is the program map table of the program of the recording target, then the process advances into a step S22.

In the step S22, the program map table (PMT) is generated with using the TS packet generating function unit 26, upon basis of the stream ID and the PID information, which are recorded in the management information recorder unit 15, and is recorded in the temporary information recording unit 18, and then the process advances into a step S23.

In the step S23, the TS packet including the renewed program map table (PMT), which is generated in the previous step, is delivered to the TS packet renewal function unit 27 and the recording function unit 10. In a next step S24, the TS packet recording counter of the management information recorder unit 15 is counted up, and the process advances into a step S25.

In the step S25, the TS packet recording counter of the management information recorder unit 15 is compared with a setup value, which is arbitrarily determined for the program, and in case where it exceeds the setup value, then the process advances into a step S26. In the step S26, only a fixed length of the internal information of the digital television apparatus 1 is obtained from the internal information accumulation buffer 17, and it is recorded in a temporary memorizing area, and then the process advances into a step S27.

In the step S27, a header for the TS packet is generated with using the TS packet header generating function unit 25, and the process advances into a step S28. In the step S28, the TS packet is generated from the internal information recorded in the temporary information recorder unit 18, with using the TS packet generating function unit 26, and then the process advances into a step S29.

In the step S29, the TS packet renewal function unit 27 delivers the TS packet, which is generated in the step S21, to the recording function unit, and the recording function unit records the TS packet. In a next step S30 is conducted checking on a remaining amount or volume of the internal information recording buffer, and in case if there is the remaining volume, the process turns back to the step S20, while it is end if there is not.

In the embodiment mentioned above, the explanation was given on the example, in which the internal information is recorded in the HDD recorder apparatus, with which the digital television apparatus is connected; however, it is needless to say that even the internal information of the HDD recorder apparatus may be recorded in the form of the TS stream, in the similar manner.

With the embodiment mentioned above, it is possible to utilize the internal information for recording and/or analyzing, if there is a stream, which is not used for the program of the digital broadcasting under recording, even in the case when the digital broadcast recording function is used or when the digital broadcast recording function of an external equipment connected with is used, when trouble or abnormality occurs, within the built-in equipment having the digital broadcast receiving/recording function therein, such as, the digital television apparatus and/or the HDD recorder apparatus, etc.

With this, it is possible to obtain the information at the time when trouble or abnormality occurs, even when using the recording function. Also, since the internal information is recorded in the form of the broadcasting program, into the equipment having the digital broadcast receiving/recording function, such as, the HDD recorder apparatus, etc., therefore it is possible to record a large amount of information therein. Further, since being recorded in the form of the broadcast program, then it is possible to obtain a backup thereof, easily, onto a device, such as, a DVD, etc.

While we have shown and described several embodiments in accordance with our invention, it should be understood that disclosed embodiments are susceptible ofchangesand modifications without departing from the scope of the invention. Therefore, we do not intend to be bound by the details shown and described herein but intend to cover all such changes and modifications that fall within the ambit of the appended claims, as interpreted by the description and drawings.

## Claims

1. A method for recording internal information of video equipment, for digital video information of the video equipment, comprising the following steps of:
a step for obtaining internal information of the equipment;
a step for analyzing a streamof the digital video information to be recorded, and for detecting a packet identifier not used for a packet, recording said internal information therein;
a step for processing the internal information of said equipment into packet information; and
a step for changing the stream of said video information, so as to include the packet information of the internal information of said equipment therein, wherein
the internal information is included in a part of the stream of the digital video information, whereby to record the digital video information.

2. The method for recording internal information of video equipment, as described in the claim 1, wherein said step for detecting the packet identifier not used comprises:
a step for obtaining PAT of TS;
a step for determining on if a service identifier is included or not for a broadcasting video to be recorded into the PAT obtained;
a step for obtaining PMT of said TS when the service identifier of the broadcasting video is included the PAT; and
a step for detecting the packet identifier described in said PMT, whereby determining the packet identifier not used.

3. A recording apparatus for digital video information of video equipment, comprising:
an internal information receiver unit, which is configured to receive an internal information of said external equipment, including at least a digital television apparatus;
a detector unit, which is configured to analyze a stream of the digital video information to be recorded, so as to detect a packet identifier not used for a packet, into which said internal information should be recorded;
a packet generator unit, which is configured to process the internal information of said equipment to packet information; and
an internal information recorder unit, which is configured to change the stream of said video information, so as to include the packet information of the internal information for said equipment therein, wherein
the internal information is included in a part of the stream of the digital video information, whereby to record the digital video information.

4. The recording apparatus for digital video information, as described in the claim 3, wherein
said detector unit obtains PAT of TS of the digital video information, determines on if a service identifier is included or not for a broadcasting video to be recorded into the PAT obtained, and obtains PMT of said TS when the service identifier of the broadcasting video is included the PAT, whereby determining the packet identifier not used.

5. The recording apparatus for digital video information, as described in the claim 3, wherein
said internal information receiver unit inputs an analog video signal, which is outputted form an internal information output destination recorder unit of the external equipment, so as to convert it into a digital signal as that internal information.
